# EUROPÄISCHE PATENTSCHRIFT

(11) **EP 2 984 738 B1**
(45) Veröffentlichungstag und Bekanntmachung des Hinweises auf die Patenterteilung: **03.05.2017**
(21) Anmeldenummer: 14718011.1
(22) Anmeldetag: 27.03.2014
(51) Int. Cl.: H02K 1/14, H02K 1/20, H02K 7/18, H02K 21/22, F03B 3/02

(54) **ANLAGE ZUR ERZEUGUNG VON ELEKTRISCHER ENERGIE**
DEVICE TO PRODUCE ELECTRICAL ENERGY
DISPOSITIF POUR LA PRODUCTION D'ENERGIE ELECTRIQUE

(30) Priorität: 12.04.2013 CH 769132013
(43) Veröffentlichungstag der Anmeldung: 17.02.2016
(73) Patentinhaber: Textilma AG, 6362 Stansstad (CH)
(72) Erfinder: BORER, Silvan, CH-5070 Frick (CH)
(74) Vertreter: Schmauder & Partner AG Patent- & Markenanwälte VSP
(86) Internationale Anmeldenummer: PCT/EP2014/056178
(87) Internationale Veröffentlichungsnummer: WO 2014/166752

(56) Entgegenhaltungen:
- EP-A1- 2 365 210
- FR-A1- 2 945 388

## Beschreibung

### Technisches Gebiet

Die Erfindung betrifft eine Anlage zur Erzeugung von elektrischer Energie aus einem veränderlichen Wasserdurchfluss gemäss dem Oberbegriff von Anspruch 1.

### Stand der Technik

Grundsätzlich ist es seit langem bekannt, insbesondere für Kleinwasserkraftwerke, Turbinen mit verstellbaren Leitschaufeln einzusetzen, die ein optimiertes Turbinenkonzept prinzipiell möglich machen. Solche Turbinen mit verstellbaren Leitschaufeln sind unter dem Namen Francis-Turbine wohlbekannt.
Auch Francis Turbinen haben aber bei der Erzeugung von elektrischer Energie aus Wasserkraft grosse Schwierigkeiten, wenn die zu Verfügung stehende Wassermenge und der Druck nicht gleichmässig und konstant sind. Wie sich aus vielen Schriften, z.B. aus der EP 1 970 561 A1 und der EP 2 365 210 A1 ergibt, sind diverse Lösungsansätze, insbesondere mit Bypasskanälen versucht worden.
Die beschriebene Problematik tritt insbesondere auf bei dem Verbrauch von Nutzwasser, z.B. Trinkwasser. Da aber insbesondere bei Nutzwasser ein grosses Energiepotential besteht, erscheint es eine Aufgabe der Erfindung, die Turbine und damit die Energie möglichst über den gesamten Bereich variablen Verbrauchs nutzen zu können.
Häufig wird bei Kleinkraftwerken deswegen eine Peltonturbine unter erhöhtem geregeltem Luftdruck in einem abgeschlossenen Gehäuse eingesetzt. Dabei wird die elektrische Leistung bei den unterschiedlich anfallenden Drehzahlen, mit einer geregelten verstellbaren Düse angepasst. Auch muss bei diesem Verfahren, durch die Beimischung von Luft in das Trinkwasser, diese wieder aufwendig entlüftet werden. Weiterhin werden verkehrt laufende Kreiselpumpen verwendet, die aber nur mit einer bestimmten Wassermenge einen vernünftigen Wirkungsgrad besitzen.

Weiterhin ist es aus der WO 2008/049245 A1 grundsätzlich bekannt, insbesondere bei Kleinmotoren, Konzepte einzusetzen, bei denen der Antrieb einen bürstenlosen, als Aussenläufer ausgebildeten Gleichstrommotor mit einem Stator und einem Rotor umfasst und der Motor als Gleichstrommotor mit asymmetrischer Vielpolausführung ausgebildet ist.

Aus der EP 2 365 210 A1 ist eine Anlage bekannt mit einer Turbine mit verstellbaren Leitschaufeln, einem Generator mit einem Rotor und einem Stator und einer Regelungseinrichtung. Dabei ist der Rotor bereits mit einer Vielzahl von Permanentmagneten, der Stator mit einer Vielzahl von Generatorspulen aufweisenden Statorzähnen ausgebildet, wobei bereits vorgeschlagen wird, dass die Zahl der Statorzähne ist um 2 grösser oder kleiner ist als die Zahl der Permanentmagnete. Die Regelungseinrichtung soll so eingerichtet sein, dass die Stellung der Leitschaufeln und/oder die abzugebende elektrische Leistung in Abhängigkeit vom Ausgangswasserdruck und/oder von der Drehzahl des Rotors regelbar ist. Dieser Ansatz hat sich aber nur bedingt bewährt. Insbesondere sind die in der EP 2 365 210 A1 vorgeschlagenen Massnahmen nicht optimal geeignet, die Baugrösse der Anlage klein zu halten. Dies erscheint aber wichtig und zwar ohne wesentliche Verschlechterung der Betriebsleistung der Anlage.

### Darstellung der Erfindung

Aufgabe der Erfindung ist es, eine Anlage zur Gewinnung von Energie, nämlich elektrischer Energie aus einem veränderlichen Wasserdurchfluss zu verbessern, insbesondere die Massnahmen zu optimieren, mit der die Baugrösse der Anlage klein gehalten werden kann, ohne dass dies negative Folgen auf die Betriebsleistung hat.

Die Aufgabe der Erfindung wird durch eine Anlage nach Anspruch 1 gelöst. Dabei haben die Massnahmen der Erfindung zunächst einmal zur Folge, dass der benötigte Platz - gegenüber der in der EP 2 365 210 A1 vorgeschlagenen Anlage - nochmals wesentlich geringer gehalten werden kann, ohne dass es zu einer Einbusse bei der Betriebsleistung kommen würde. Überraschend ist die Lösung der vorliegenden Erfindung insbesondere deshalb, weil das Kühlungskonzept - anders als bei bisherigen Anlagen - mit den Massnahmen der Erfindung sehr einfach und insbesondere platzsparend verwirklicht werden kann.

Dabei kann die Anlage mit einer Turbine mit speziell berechneten Leitschaufeln - also nicht verstellbaren - optimal mit einem - dazu passenden - Generator gekoppelt werden und der Erfindung der Wirkungsgrad verbessert werden, ohne dass Stauanlagen eingebaut werden müssten. Das Lösungskonzept gemäss der vorliegenden Erfindung erlaubt eine Betriebsoptimierung und auch einen optimalen Fernbetrieb. Durch die Lösung gemäss der vorliegenden Erfindung wird erreicht, dass die Netzeinspeisung auch unter schwankendem Wasserverbrauch optimal an die Netzfrequenz angepasst werden kann. Durch die viel weniger benötigten Maschinenteile, wie eine Kupplung zwischen Turbine und Generator, kann die gesamte Anlage viel günstiger hergestellt werden. Im Gegensatz zur Lösung aus der EP 2 365 210 A1 wird also weder ein Kupplung noch ein Träger für den Stator benötigt. Vorteilhafterweise ist die Turbine als Flügelzellenturbine ausgebildet.

Besonders vorteilhaft kann die Anlage ausgebildet werden, wenn der Rotor zumindest ein Lager der Welle vollständig überdeckt. Dies wird noch verbessert, wenn der Rotor auch das zweite Lager zumindest teilweise, vorzugsweise auch vollständig, überdeckt. Dies erscheint deswegen überraschend, als man bislang zumindest ein Lager nahe an den Flügelzellen - und damit doch erheblich vom Generator entfernt angeordnet hat. Durch das überdeckende Konzept und die oben beschriebene Statorlösung kann nun einerseits das Kühlmanagement, das Platzmanagement aber auch die mechanische Belastung gut gelöst werden. Allerdings musste man sich mit dieser Lösung vom Stand der Technik weg bewegen und eine eigene, erfinderische Lösung suchen.

Wenn auch die Erfindung mit festen Leitschaufeln vorteilhaft ausgebildet werden kann, wenn die Eingangsdruckverhältnisse keinen allzu grossen dynamischen Bereich aufweisen oder der eingangsdruck auf andere Weise in einem solchen Bereich gehalten werden kann, so kann es doch vorteilhaft sein, wenn die Leitschaufeln verstellbar ausgebildet sind. Vorteilhafterweise sind dann die Leitschaufeln über Verbindungselemente, insbesondere einen Verbindungsbolzen und einen Verstellhebel, mit einer Verstelleinrichtung wirkverbunden, wobei die Verstelleinrichtung mit einer Regelelektronik verbunden sind. Dabei ist es vorteilhaft, wenn die Verstelleinrichtung einen Servoantrieb und ein dem Servoantrieb zur Verstellung der Leitschaufel wirkverbundenes Übersetzungsmittel, insbesondere ein Zahnrad, aufweist. Die Anlage kann vorteilhafterweise einen Drucksensor zur Messung des Wasserdrucks aufweisen, wobei die Regelelektronik so eingerichtet sein kann, dass der Durchfluss bei variablem Eingangsdruck konstant oder annähernd konstant gehalten werden kann.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft - eine erfindungsgemässe Anlage erläutert wird. In den Zeichnungen zeigt:
- Figur 1: eine Anlage von der Seite gemäss einem ersten bevorzugten Ausführungsbeispiel der Erfindung;
- Figur 2: eine Ansicht gemäss Figur 1 im Schnitt A-A;
- Figur 3: eine Ansicht gemäss Figur 1 im Schnitt B-B;
- Figur 4: eine Anlage von der Seite gemäss einem zweiten bevorzugten Ausführungsbeispiel der Erfindung mit einer Flügelzellenturbine;
- Figur 5: eine Ansicht gemäss Figur 4 im Schnitt C-C;
- Figur 6: eine perspektivische Ansicht eines Ausführungsbeispiels der Erfindung mit Darstellung der Regelelektronik.

### Wege zur Ausführung der Erfindung

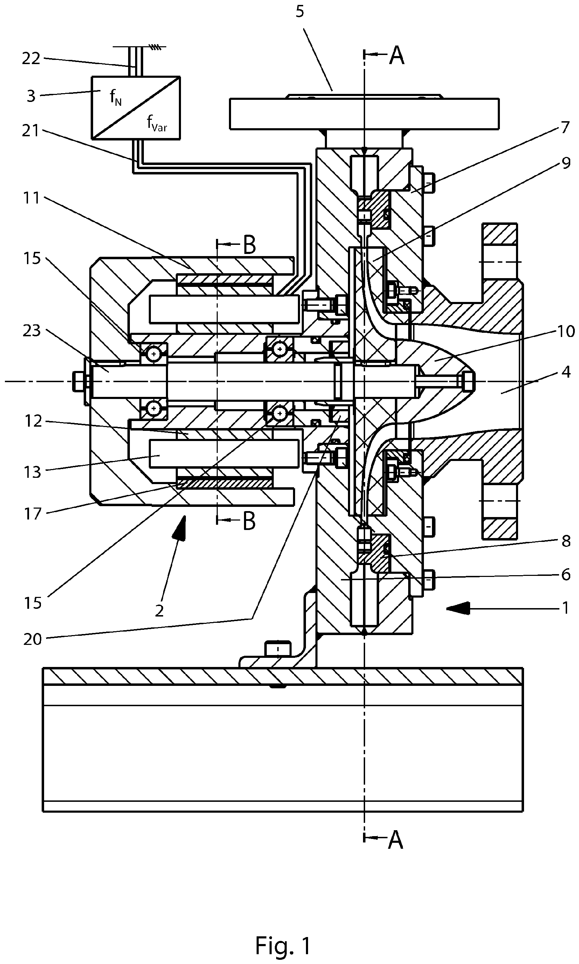

Die in Figur 1 als Ganzes dargestellte Anlage zur Erzeugung von elektrischer Energie aus einem veränderlichen Wasserdurchfluss und einem veränderlichen Wasserdruck gemäss einem ersten bevorzugten Ausführungsbeispiel umfasst als wesentliche Baugruppen eine Turbine 1, einen Generator 2 und eine Leistungselektronik (Wechselrichter) 3. Der Wechselrichter 3 ist dabei einerseits mit einer Dreiphasenleitung mit den Spulen 13 des Generators 3 verbunden und weist andererseits einen zwei- oder dreiphasigen Netzanschluss auf.

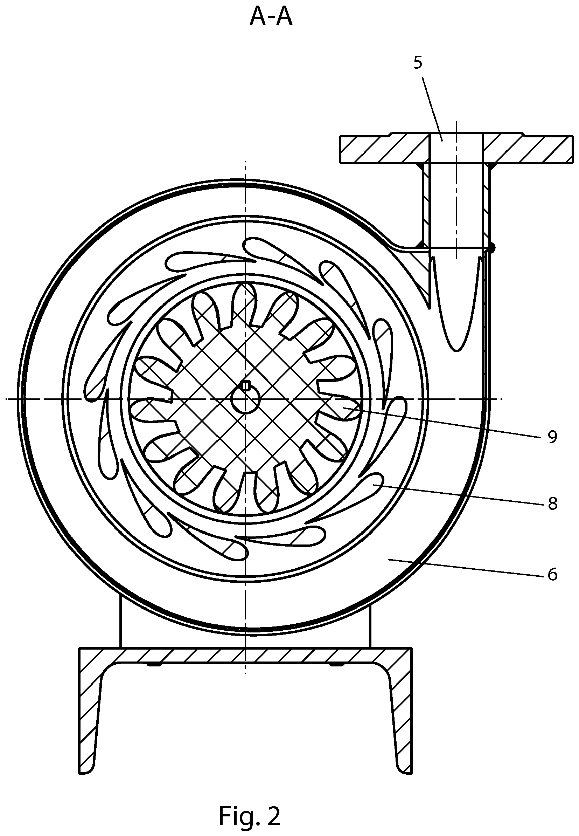

Die Turbine ist mit Leitschaufeln 8 und einem auf einer Welle 23 montierten Turbinenlaufrad 9 ausgebildet, die in einem Turbinengehäuse 6 mit Deckel 7 angeordnet sind. Das Turbinengehäuse weist weiterhin einen Eingangsstutzen 5 und einen Ausgangsstutzen 4 für das die Turbine mittels der vorstehend genannten Elemente antreibenden Nutzwasser auf. Damit sind die turbinenseitigen Elemente der Anlage, die im Detail nochmals als Schnitt A-A der Figur 1 in Figur 2 dargestellt sind, bereits im Wesentlichen beschrieben.

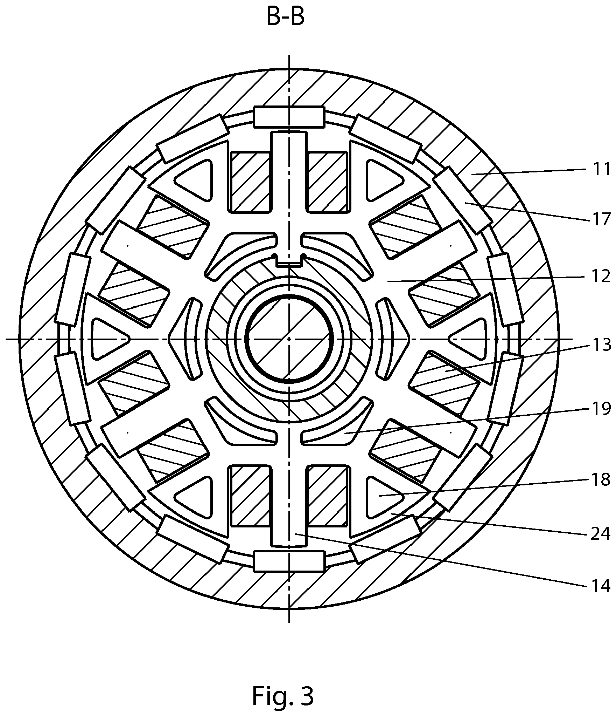

Weiterhin mit der Welle verbunden ist der Rotor 11 des Generators 3, der - da der Generator als Aussenläufer ausgebildet ist - im vorliegenden Ausführungsbeispiel 14 Permanentmagnete 17 in seinem inneren Umfang aufweist. Innerhalb des Rotors befindet sich der Stator mit dem Statorblech 12, an welchem nach aussen, also gegen den Rotor gerichtet, 6 Statorzähne 14 und 6 Statorstege 24 angeordnet sind. Die Statorzähne sind in ihrer Längsausrichtung jeweils zylindrisch, so dass die Spulen 13 bei der Montage auf die Statortzähne aufgeschoben werden können und sie umschliessen. Zwischen den Spulen sind dann im Stator die im vorliegenden Ausführungsbeispiel in etwa dreiecksförmig mit einer kreissegmentartigen Aussenkante ausgebildeten Statorstege 24 angeordnet. Das Statorblech 12, insbesondere auch die Statorstegen 24 sind mit Lüftungslöchern 18 bzw. 19, also durch die Statorstege und das Statorblech durchgehende Bohrungen ausgebildet. Diese Lüftungslöcher 18 und 19 bewirken eine Kühlung des Stators im Betrieb. Der Rotor und der Stator sind im Detail nochmals als Schnitt B-B der Figur 1 in Figur 3 dargestellt. Die vorstehend beschriebenen Massnahmen in Bezug auf die Kühlung des Stators erscheinen für den Betrieb nützlich, erweist sich aber auch im Zusammenhang mit den im Folgenden beschriebenen Massnahmen bezüglich der Lagerung der Welle schon notwendig.

In dieser Ausführungsform ist die Welle 23 im Bereich des Stators mittels zweier Kugellager 15 und 16 gelagert, wobei der Rotor 11 im vorliegenden Ausführungsbeispiel vollständig überdeckt. Dies hat zwar - erst durch die Massnahmen der Erfindung überwindbare - scheinbare Nachteile in Bezug auf die Kühlung, führt aber zu einer - gemäss der Aufgabe der Erfindung gewünschten - sehr kompakten Bauweise. Dies ist insofern von besonderer Bedeutung, da einerseits auf eine Kupplung oder einen Träger für den Stator verzichtet werden kann, und andererseits die Welle - eben wegen der kompakten Bauweise - nicht im Bereich der Turbine gelagert werden muss, sondern dort - wegen der kompakten Baugrösse ist dies möglich - freisteht. Die Anlage weist eine Dichtung 20 im Bereich zwischen Turbine 2 und Generator 3 auf.

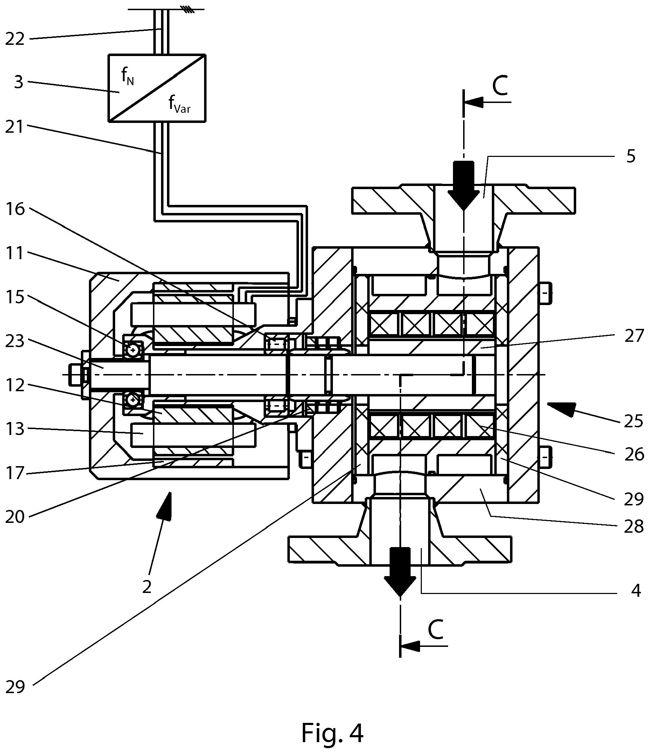

Die in Figur 4 als Ganzes dargestellte Anlage zur Erzeugung von elektrischer Energie aus einem veränderlichen Wasserdurchfluss und einem veränderlichen Wasserdruck gemäss einem zweiten Ausführungsbeispiel umfasst als wesentliche Baugruppen wiederum eine Turbine, einen Generator 2 und eine Leistungselektronik (Wechselrichter) 3, wobei diese Turbine als Flügelzellenturbine 25 ausgebildet ist. Im Weiteren werden nur die Unterschiede zur vorstehend beschriebenen Turbine erläutert.

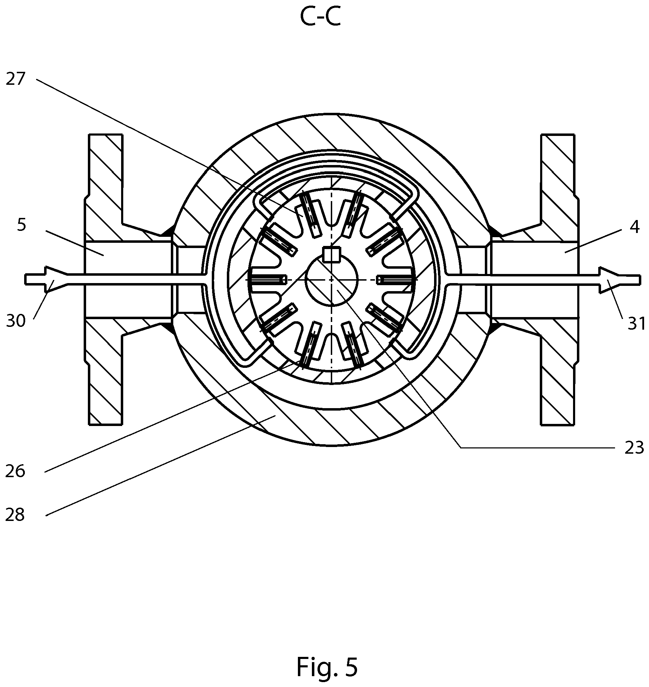

Die Turbine ist mit einem Flügelzellenrotor 27 mit Schlitzen ausgerüstet, der in einem Flügelzellengehäuse 28 untergebracht ist. Die 10 Flügel 26 der Flügelzellenturbine 25 sind im Flügelzellrotor 27 verschiebbar gelagert, zwei schwimmend angeordnete Steuerplatten sind in Figur 4 mit 29 bezeichnet. Die Flügelzellenturbine 25 weist wiederum einen Eingangsstutzen 5 und einen Ausgangsstutzen 4 für das die Turbine mittels der vorstehend genannten Elemente antreibenden Nutzwasser auf. In Figur 5 - im Detail als Schnitt A-A der Figur 4 - ist der Wassereinlauf 30 (vorne) und der Wasserauslauf 31 (hinten) dargestellt. In dieser Ausführung ist die innere Lagerung als Drehlager ausgebildet.

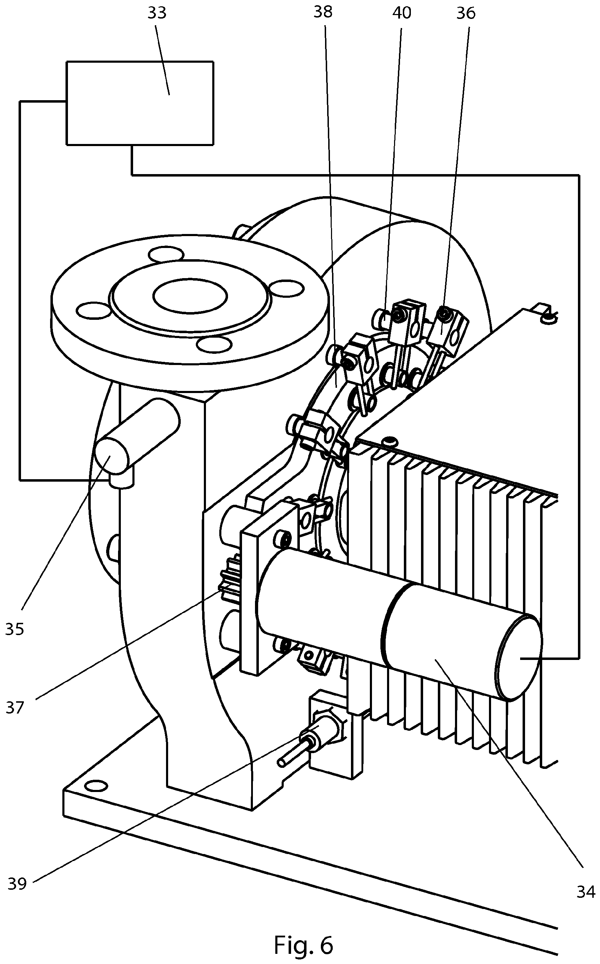

In Figur 6 ist ein Ausführungsbeispiel der Erfindung verstellbaren Leitschaufeln 8 dargestellt. Dabei sind Leitschaufeln 8 über Verbindungselemente, die im Ausfürhungsbeispiel einen Verbindungsbolzen 40 und einen Verstellhebel 36, umfassen mit einer Verstelleinrichtung wirkverbunden, wobei die Verstelleinrichtung mit einer Regelelektronik 33 verbunden ist. Die Verstelleinrichtung einen Servoantrieb 34 und ein dem Servoantrieb zur Verstellung der Leitschaufel wirkverbundenes Übersetzungsmittel, insbesondere ein Zahnrad, aufweist. Ein Drucksensor 35 zur Messung des Wasserdrucks, nämlich des Eingangsdrucks, dient der Regelelektronik dazu, den Durchfluss bei variablem Eingangsdruck durch Verstellung der Leitschaufeln 8 konstant oder annähernd konstant zu halten.

### Bezugszeichenliste

- 1: Turbine gemäss einem ersten Ausführungsbeispiel
- 2: Generator
- 3: Wechselrichter
- 4: Ausgangsstutzen
- 5: Eingangsstutzen
- 6: Turbinengehäuse
- 7: Deckel
- 8: Leitschaufeln
- 9: Turbinenlaufrad
- 10: Auslaufkonus
- 11: Rotor
- 12: Statorblech
- 13: Spulen
- 14: Statorzähne
- 15: Kugellager aussen
- 16: Kugellager innen
- 17: Permanentmagnete
- 18: Lüftungsloch im Stator aussen
- 19: Lüftungsloch im Stator innen
- 20: Dichtung
- 21: 3-Phasen Leitung zur Leistungselektronik
- 22: Netzanschluss 2 oder 3 phasig
- 23: Welle
- 24: Statorstege
- 25: Flügelzellenturbine
- 26: Flügel
- 27: Flügelzellenrotor mit Schlitzen
- 28: Flügelzellengehäuse
- 29: Steuerplatte schwimmend
- 30: Wassereinlauf vorne
- 31: Wasserauslauf hinten
- 32: Rollenlager
- 33: Regelelektronik
- 34: Servoantrieb
- 35: Drucksensor
- 36: Verstellhebel
- 38: Verstellring mit Verzahnung
- 39: Näherungsschalter
- 40: Verbindungsbolzen

## Patentansprüche

1. Anlage zur Erzeugung von elektrischer Energie aus einem veränderlichen Wasserdurchfluss, mit
- einer Turbine (1) mit Leitschaufeln (8) und einem Turbinenlaufrad (9) und einer Welle (23),
- einem Generator (2) mit einem Rotor (11) und einem ein Statorblech (12) aufweisenden Stator,
wobei der Rotor (11) des Generators (2) als Aussenläufer ausgebildet ist, wobei der Rotor (11) des Generators weiterhin mit eine Vielzahl von Permanentmagneten (17) aufweist,
wobei der Stator des Generators (2) mit einer Vielzahl Statorszähnen (14) und Spulen (13) ausgebildet ist,
- und einem Wechselrichter (3), der so ausgebildet ist, dass die Frequenz der erzeugten elektrischen Leistung an die Frequenzanforderungen des Stromnetzes anpassbar ist,
wobei der Rotor (11) des Generators (2) und das Turbinenlaufrad (9) mittels der Welle (23) verbunden sind und wobei die Welle (23) mittels zumindest zweier Lager (15, 16) gelagert ist,
**dadurch gekennzeichnet, dass**
der Stator weiterhin Statorstege (24) zwischen den Spulen (13) aufweist, wobei der Stator halb so viele Spulen (13) wie Statorzähne (14) und Statorstege (24) zusammen aufweist, wobei die Spulen (13) auf die Statorzähne (14) aufgesteckbar ausgebildet sind, und wobei die Zahl der Statorzähne (14) um 2 grösser oder kleiner ist als die Zahl der Permanentmagnete (17) des Rotors ist, und dass
das Statorblech (12) Lüftungslöcher (18, 19) zur Kühlung des Generators (2) aufweist, wobei zumindest ein Teil der Lüftungslöcher (18) zur Kühlung des Generators in den Statorstegen (24) ausgebildet sind.

2. Anlage nach Anspruch 1, **dadurch gekennzeichnet, dass**
der Rotor (11) zumindest ein Lager (15) der Welle (23) vollständig überdeckt.

3. Anlage nach Anspruch 2, **dadurch gekennzeichnet, dass**
der Rotor auch das zweite Lager (16) zumindest teilweise, vorteilhafterweise vollständig, überdeckt.

4. Anlage nach einem der Ansprüche 1 bis 3, **dadurch gekennzeichnet, dass** die Leitschaufeln (8) als feste Leitschaufeln ausgebildet sind.

5. Anlage nach einem der Ansprüche 1 bis 4, **dadurch gekennzeichnet, dass** die Leitschaufeln (8) verstellbar ausgebildet sind, wobei die Leitschaufeln (8) über Verbindungselemente, insbesondere einen Verbindungsbolzen (40) und einen Verstellhebel (36), mit einer Verstelleinrichtung wirkverbunden sind, wobei die Verstelleinrichtung mit einer Regelelektronik (33) verbunden ist.

6. Anlage nach Anspruch 5, **dadurch gekennzeichnet, dass** die Verstelleinrichtung einen Servoantrieb (34) und ein dem Servoantrieb zur Verstellung der Leitschaufel wirkverbundenes Übersetzungsmittel, insbesondere ein Zahnrad, aufweist.

7. Anlage nach Anspruch 5 oder 6, **gekennzeichnet durch** einen Drucksensor (35) zur Messung des Wasserdrucks, wobei die Regelelektronik so eingerichtet ist, dass der Durchfluss bei variablem Eingangsdruck konstant oder annähernd konstant gehalten werden kann.

8. Anlage nach einem der Ansprüche 1 bis 4, **dadurch gekennzeichnet, dass** die Turbine (1) als Flügelzellenturbine ausgebildet ist.

## Claims

1. A device for producing electrical energy from a variable water flow-through, comprising
- a turbine (1) with guide vanes (8) and a turbine runner wheel (9) and a shaft (23),
- a generator (2) with a rotor (11) and a stator provided with a stator sheet (12),
wherein the rotor (11) of the generator (2) is configured as an external runner;
wherein the rotor (11) of the generator further comprises a plurality of permanent magnets (17),
wherein the stator of the generator (2) is configured with a plurality of stator teeth (14) and coils (13),
- and a power inverter (3), which is configured in such manner that the frequency of the generated electrical power is adaptable to the frequency requirements of the power grid,
wherein the rotor (11) of the generator (2) and the turbine runner wheel (9) are connected to each other by means of a shaft (23), and wherein the shaft (23) is supported by means of at least two bearings (15, 16),
**characterized in that**
the stator further comprises stator bridges (24) between the coils (13), wherein the stator has half as many coils (13) as stator teeth (14) and stator bridges (24) together, wherein the coils (13) are configured to be pluggable onto the stator teeth (14), and wherein the number of the stator teeth (14) is larger or smaller by 2 than the number of permanent magnets (17) of the rotor, and that
the stator sheet (12) has ventilation holes (18, 19) for cooling the generator (2), wherein at least one part of the ventilation holes (18) for cooling the generators are provided in the stator bridges (24).

2. The device according to claim 1, **characterized in that** the rotor (11) completely covers at least one bearing (15) of the shaft (23).

3. The device according to claim 2, **characterized in that** the rotor also covers at least partially, advantageously completely, the second bearing (16).

4. The device according to one of claims 1 to 3, **characterized in that** the guide vanes (8) are configured as fixed guide vanes.

5. The device according to one of claims 1 to 4, **characterized in that** the guide vanes (8) are configured adjustably, the guide vanes (8) being cooperatively connected to an adjusting device via connecting elements, particularly via a connecting stud (40) and an adjusting lever (36), the adjusting device being connected to an electronic controller (33).

6. The device according to claim 5, **characterized in that** the adjusting device comprises a servo driver (34) and a transmission means, particularly a gear wheel, cooperatively connected to the servo driver for adjusting the guide vanes.

7. The device according to claim 5 or 6, **characterized by** a pressure sensor (35) for measuring the water pressure, wherein the electronic controller is configured in such manner that the flow rate can be kept constant or approximately constant with a variable input pressure.

8. The device according to one of claims 1 to 4, **characterized in that** the turbine (1) is configured as a vane type turbine.

## Revendications

1. Installation de production d'énergie électrique à partir d'un débit d'eau variable comprenant :
une turbine (1) équipée d'aubes directrices (8), d'une roue de turbine (9) et d'un arbre (23),
un générateur (2) équipé d'un rotor (11) et d'un stator muni d'une tôle de stator (12),
le rotor (11) du générateur (2) étant réalisé sous la forme d'un induit externe,
le rotor (11) du générateur étant, en outre, équipé d'un ensemble d'airrxants permanents (17),
le stator du générateur (2) étant équipé d'un ensemble de dents de stator (14) et de bobines (13),
et un onduleur (3) réalisé de sorte que la fréquence de la puissance électrique produite puisse être adaptée aux exigences de fréquence du réseau,
le rotor (11) du générateur (2) et la roue de turbine (9) étant reliés au moyen de l'arbre (23) et l'arbre (23) étant monté au moyen d'au moins deux paliers (15, 16),
**caractérisée en ce que**
le stator comporte en outre des ailettes de stator (24) entre les bobines (13), le stator ayant deux fois moins de bobines (13) que de dents de stator (14) et d'ailettes de stator (24) considérés dans leur ensemble, les bobines (13) pouvant être enfichées sur les dents de stator (14), et le nombre de dents de stator (14) étant supérieur ou inférieur de 2 au nombre d'aimants permanents (17) du rotor, et
la tôle de stator (12) comprend des perçages d'aération (18, 19) pour permettre de refroidir le générateur (2), au moins une partie des perçages d'aération (18) permettant de refroidir le générateur étant réalisée dans les ailettes de stator (24).

2. Installation conforme à la revendication 1,
**caractérisée en ce que**
le rotor (11) recouvre complètement au moins un palier (15) de l'arbre (23).

3. Installation conforme à la revendication 2,
**caractérisée en ce que**
le rotor recouvre également le second palier (16) au moins partiellement et de préférence totalement.

4. Installation conforme à l'une des revendications 1 à 3,
**caractérisée en ce que**
les zones directrices (8) sont réalisées sous la forme d'aubes directrices fixes.

5. Installation conforme à l'une des revendications 1 à 4,
**caractérisée en ce que**
les aubes directrices (8) sont réglables et sont reliées fonctionnellement par des éléments de liaison, en particulier un goujon de liaison (40) et un levier de réglage (36) avec un dispositif de réglage, ce dispositif de réglage étant relié à une électronique de réglage (33).

6. Installation conforme à la revendication 5,
**caractérisée en ce que**
le dispositif de réglage comprend une servocommande (34) et des moyens de transmission, en particulier une roue dentée en liaison fonctionnelle avec la servocommande pour permettre de régler les aubes directrices.

7. Installation conforme à la revendication 5 ou 6,
**caractérisée par**
un capteur de pression (35) permettant de mesurer la pression de l'eau, l'électronique de réglage étant réalisée de façon à permettre de maintenir le débit constante ou approximativement constant en présence d'une pression d'entrée variable.

8. Installation conforme à l'une des revendications 1 à 4,
**caractérisée en ce que**
la turbine (1) est réalisée sous la forme d'une turbine à cellules à ailettes.
